# EUROPÄISCHE PATENTANMELDUNG

(11) **EP 0 794 391 A1**
(43) Veröffentlichungstag der Anmeldung: **10.09.1997**
(21) Anmeldenummer: 96103470.9
(22) Anmeldetag: 06.03.1996
(51) Int. Cl.: F24D 3/14, B25B 31/00

(54) **Setzgerät**

(71) Anmelder: Praski, Bernd, 85221 Dachau (DE)
(72) Erfinder: Praski, Bernd, 85221 Dachau (DE); Bellinger, Hermann, 82362 Weilheim (DE)
(74) Vertreter: Wahl, Hendrik, Dr.-Ing.

(57) **Zusammenfassung**

Die Erfindung betrifft ein Setzgerät (10) für Klammern (12) zur Befestigung von Fußbodenheizungsrohren an einem Untergrund (14) mit einer Zuführung (22) für die Klammern,
einem im oberen Bereich der Zuführung angeordneten Haltegriff (38) für das Gerät und einem am unteren Ende der Zuführung angeordneten Eindrückmechanismus (28-36) für die Klammern,
der einen per Fuß betätigbaren Setzstempel (28) zum Eindrücken der Klammern umfaßt, welcher an dem unteren Ende der Zuführung oder an einem fest mit dem Ende verbundenen Rahmenteil bewegbar gelagert ist. Mit diesem Setzgerät ist ein weitgehend ermüdungsfreies und unstrapaziöses Arbeiten auch bei der Verlegung von Fußbodenheizungsrohren auf größeren Flächen gewährleistet.

## Beschreibung

Die vorliegende Erfindung betrifft ein Setzgerät für Klammern zur Befestigung von Fußbodenheizungsrohren an einem Untergrund mit einer Zuführung für die Klammern.

Es sind Setzgeräte bekannt, die einen vertikalen Rahmen aufweisen, in dem ein Gestänge zur Betätigung eines Eindruckstempels geführt ist. Ein Handgriff zur Betätigung des Stempels ist an der Oberseite des Rahmens angeordnet. An dem Rahmen ist seitlich bzw. vorne oder hinten eine Magazinzuführung angeordnet, die im oberen Bereich vertikal, d.h. parallel zum Rahmen verläuft und nach unten hin horizontal in den Eindrückbereich des Setzstempels ausläuft. Diese Zuführung hat in etwa die Form eines L. Die Klammern können oben auf die Magazinzuführung aufgesteckt werden und werden durch Betätigung des Handgriffes an dem unteren Ende über ein Fußbodenheizungsrohr in eine Halteplatte, z.B. eine Lochplatte, eingedrückt.

Es hat sich gezeigt, daß ein derartiger Vorgang mit einigem Kraftaufwand verbunden ist, so daß die Montage von Fußbodenheizungsrohren auf größeren Flächen mit einigem Arbeitsaufwand verbunden ist. Zudem ist diese bekannte Vorrichtung relativ schwer, so daß eine Ermüdung frühzeitig eintritt.

Es ist Aufgabe der Erfindung, ein einfach zu bedienendes Setzgerät zu schaffen, welches ein weitgehend ermüdungsfreies und unstrapaziöses Arbeiten auch bei der Verlegung von Fußbodenheizungsrohren auf größeren Flächen gewährleistet.

Diese Aufgabe wird erfindungsgemäß durch die Merkmale des Anspruchs 1 gelöst. Vorteilhafte Weiterbildungen der Erfindung sind Gegenstand der Unteransprüche.

Ein wesentlicher Vorteil der Erfindung besteht darin, daß ein vertikaler Rahmen für die Betätigungsvorrichtung entfällt, weil der eigentliche Rahmen nun durch die Zuführung selbst gebildet ist. Daher entfällt zum einen der Kraftaufwand, der mit dem zusätzlichen Gewicht des vertikalen Rahmenteils bei einem Setzgerät aus dem Stand der Technik verbunden war. An der Oberseite der Magazinzuführung ist der Handgriff zur Handhabung des Setzgeräts, d.h. zum Einjustieren des Setzgerätes auf eine gewünschte Position angeordnet. Ein weiterer Vorteil der Erfindung besteht nun darin, daß der Eindrückvorgang nicht über eine Betätigung des Handgriffes durchgeführt wird, sondern über eine Betätigung eines fußbetätigbaren Hebels oder Stempels, der am unteren Ende der Magazinzuführung angeordnet ist. Der ebenfalls kraftaufwendige Eindrückvorgang wird somit auf das Bein übertragen.

Da nun aufgrund der Erfindung sowohl eine leichtere Handhabung als auch durch die Fußbetätigung eine einfachere Betätigung des Setzgeräts realisiert wird, erlaubt das erfindungsgemäße Setzgerät ein ermüdungsfreies Arbeiten auch bei großen Flächen.

Vorzugsweise ist der Setzstempel, der die Klammer in die Unterlage eindrückt, als ein um eine horizontale Achse schwenkbar gelagerter Hebel ausgebildet. Eine derartige Ausführungsform der Fußbetätigung ist technisch einfach zu realisieren und sehr wartungsfreundlich. An der Oberseite des Hebels ist dann vorzugsweise die Betätigungsfläche für die Fußbetätigung angeordnet. Der Hebel ist durch eine elastische Vorrichtung in seine nicht betätigte Ruhestellung nach oben vorgespannt. Hierdurch geht der Hebel nach dem Eindrücken einer Klammer wieder selbsttätig in seine Ausgangslage zurück. In einer alternativen Ausführungsform könnte der Hebel auch als vertikal bewegbarer Stempel ausgebildet sein, an dessen Oberseite eine Betätigungsfläche für den Fuß angeordnet wäre. Allerdings erfordern derartige Stempel immer einen gewissen Aufwand an Wartung, d.h. Schmierung, wohingegen der Vorteil einer derartigen Lösung in dem geringen Platzbedarf besteht.

Bei Verwendung eines Hebels kann die Schwenkachse für den Hebel entweder an der Magazinzuführung selbst oder an einem horizontalen Rahmenteil ausgebildet sein, das an dem unteren Ende der Zuführung angebracht ist. Die elastische Vorrichtung zum Vorspannen des Hebels in seine Ruheposition ist dann vorzugsweise zwischen dem horizontalen Rahmenteil und dem Hebelarm angeordnet.

Das Setzgerät wird - wie bereits erwähnt - dafür verwendet, Klammern, die meist die Form eines auf dem Kopf stehenden "U" haben, derart in einen Untergrund einzudrücken, daß das Fußbodenheizungsrohr beidseitig an dem Untergrund gehalten wird, wobei die freien Enden des "U" durch eine Auflage- oder Halteplatte gedrückt werden, in der sie nach dem Durchdrücken durch an den freien Enden angeordnete Widerhaken verankert sind. Um bei einem derartigen Gerät das Zielen zu verbessern, ist an dem unteren Ende der Zuführung oder an einem horizontalen unteren Rahmenteil ein auf dem Kopf stehendes V- oder U-förmiges Profil angebracht, welches einfach auf das am Boden liegende Fußbodenheizungsrohr aufgelegt wird. In dieser aufgesetzten Stellung ist der Eindrückmechanismus des Setzgerätes selbsttätig richtig positioniert, so daß ein visuelles genaueres Ansteuern des Gerätes entfallen kann. Durch eine derartige "Zielvorrichtung" wird somit die Positionierung des Setzgerätes erleichtert.

In einer anderen Ausführungsform werden Fußodenheizungsrohre auf Lochplatten verlegt. In diesem Fall haben die Klammern die Form eines "U" bei dem die freien Enden der Schenkel lagerichtig nach oben weisen. An dem waagrechten Schenkel des "U" ist ein nach unten stehender Stift ausgebildet, der in die Lochplatte eingedrückt wird. Bei dieser Technik werden die Halteklammern für die Fußbodenheizungsrohre verlegt, bevor das Fußbodenheizungsrohr selbst verlegt wird. Vorzugsweise ist bei einem derartigen Setzgerät an dem unteren Ende der Zuführung oder an einem horizontalen Rahmenteil, das mit dem unteren Ende der Zuführung befestigt ist, ein Zielstift angeordnet, der in ein Loch der Lochplatte eingesetzt wird. Der Zielstift ist genau um einen Rasterabstand der Löcher in der Lochplatte gegenüber dem Eindrückmechanismus versetzt, so daß bei Einführen des Zielstiftes in die Lochplatte der Eindrückmechanismus genau über einem davor oder dahinter liegenden Loch positioniert ist. Hierfür muß das Setzgerät nur in einer der beiden Bezugsrichtungen der Lochplatte angeordnet werden, d.h. es darf nicht diagonal in dem Lochraster geführt werden.

Das untere Ende der Zuführung bzw. ein daran angebrachtes horizontales Rahmenteil ist vorzugsweise derart ausgebildet, daß es plan am Boden bzw. auf einem Heizungsrohr aufliegt, so daß sich das Gerät weitgehend selbsttätig in die richtige vertikale Stellung ausrichtet. Diese selbsttätige Ausrichtung kann durch die Anordnung des Haltegriffs unterstützt werden. Wenn beispielsweise die Zuführung für die Klammern die Form eines nach vorne gebogenen "L" aufweist, so ist vorzugsweise auch der Haltegriff nach vorne hin ausgerichtet, so daß der Schwerpunkt des Setzgerätes unter dem Haltepunkt des Haltegriffes liegt, so daß beim Greifen des Setzgerätes die richtige vertikal-horizontal Ausrichtung selbsttätig erzielt wird.

Die Zuführung für die Klammern hat vorzugsweise ein Außenprofil, das zumindest teilweise komplementär zu der Innenkontur der Halteklammern ausgebildet ist. Auf diese Weise werden die Klammern sicher an der Zuführung geführt.

Die Erfindung wird nun beispielsweise anhand der schematischen Zeichnung beschrieben. In dieser zeigen:
- Fig. 1: eine Seitenansicht auf ein fußbetätigtes Setzgerät zum Einsetzen von Halteklammern in die Lochplatten;
- Fig. 2: eine Vorderansicht des Setzgerätes aus Fig. 1;
- Fig. 3: eine weitere Ausführungsform eines Setzgerätes zum Festlegen bereits verlegter Fußbodenheizungsrohre auf einem perforierbaren Untergrund;
- Fig. 4: einen Schnitt IV-IV aus Fig. 3, jedoch ohne Handgriff und
- Fig. 5: eine Vorderansicht des Setzgerätes aus Fig. 3.

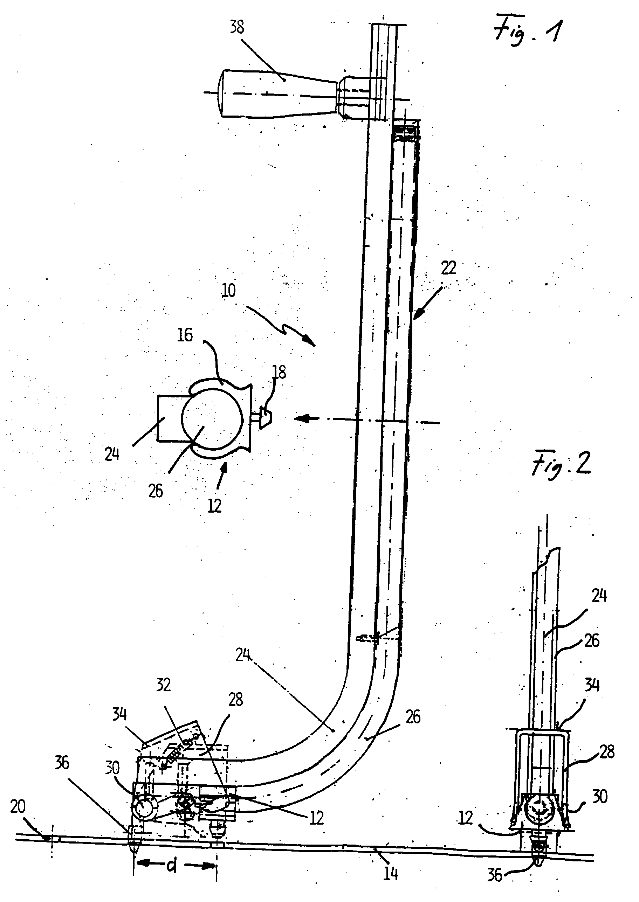

Fig. 1 zeigt ein Setzgerät 10 für die Halterungen bzw. Klammern 12 von Fußbodenheizungsrohren auf Lochplatten 14. Die Klammern haben - wie in der Querschnittsdarstellung gut zu sehen ist - einen U-förmigen Bereich 16, von dessen Basis nach unten ein Stift 18 absteht. Dieser Stift 18 wird durch das Setzgerät 10 in Löcher 20 der Lochplatte 14 eingedrückt.

Das Setzgerät 10 besteht im wesentlichen aus einem L-förmig gebogenen Rahmen 22, der aus einem vorderen rechteckigen Rahmenprofil 24 und einem mit diesem verschraubten hinteren kreisrunden Rahmenprofil 26 besteht. Dieser Rahmen 22 ist deswegen sehr vorteilhaft, weil er gleichzeitig die Magazinzuführung für die Klammern 12 bildet. Die Klammern 12 werden auf das hintere kreisrunde Rahmenprofil 26 aufgeschoben, wobei die freien Enden des U-Profils 16 der Klammern 12 an dem vorderen rechteckigen Rahmenprofil 24 anliegen. Die Klammern sind somit an dem Rahmen 22 in einer eindeutigen Lage gehalten und gleiten durch ihr Eigengewicht an dem vertikalen Abschnitt nach unten, von wo sie über einen kreisförmig gebogenen Abschnitt in das waagrechte untere Ende des Rahmens 22 geführt werden, wo ein Eindrückhebel 28 zum Eindrücken der Klammern 12 in die Lochplatte 14 vorgesehen ist. Der Hebel 28 ist um eine Achse 30 schwenkbar an dem unteren Ende des Rahmens 22 gelagert. Durch eine Feder 32 wird der Hebel 28 in seine durchgezogen dargestellte Ruheposition vorgespannt. Auf der Oberseite des Hebels 28 ist eine Betätigungsfläche 34 für eine Fußbetätigung des Hebels vorgesehen, durch den der Hebel 28 in die gestrichelt dargestellte Eindrückposition ausgelenkt wird. Hierbei drückt er die Klammer 12 in das Loch 20 der Lochplatte ein. Um das Zielen beim Eindrücken der Klammern zu erleichtern, ist an dem vorderen Ende des Rahmens 22 unterhalb der Schwenkachse 30 ein etwas nach vorne über das Rahmenende hinausragender Führungsstift 36 ausgebildet, der in ein Loch 20 der Lochplatte 14 einzustecken ist, welches vor dem eigentlichen Zielloch in der Lochplatte 14 angeordnet ist. Die Löcher 20 in der Lochplatte sind um den Abstand d voneinander beabstandet. Der Zielstift 36 ist ebenfalls um den Abstand d vor dem Eindrückbereich der Klammer in dem Setzgerät angeordnet. Auf diese Weise wird bewirkt, daß, wenn der Zielstift bzw. der Zieldorn 36 in ein Loch 20 der Lochplatte 14 eingeführt ist, bei Betätigung des Eindrückhebels 28 die Klammer 12 mit ihrem Stift 18 genau in ein Loch 20 der Lochplatte 14 eingeführt wird. Am oberen Ende des Rahmens 22 ist ein horizontaler, nach vorne ragender Handgriff 38 angeordnet, durch den das Setzgerät von Einsetzposition zu Einsetzposition bewegt wird. Der Handgriff ist dabei vorzugsweise derart angeordnet, daß er genau über dem Schwerpunkt des Setzgerätes liegt, wodurch das Setzgerät beim Tragen sozusagen selbsttätig in seine richtige Position aushängt.

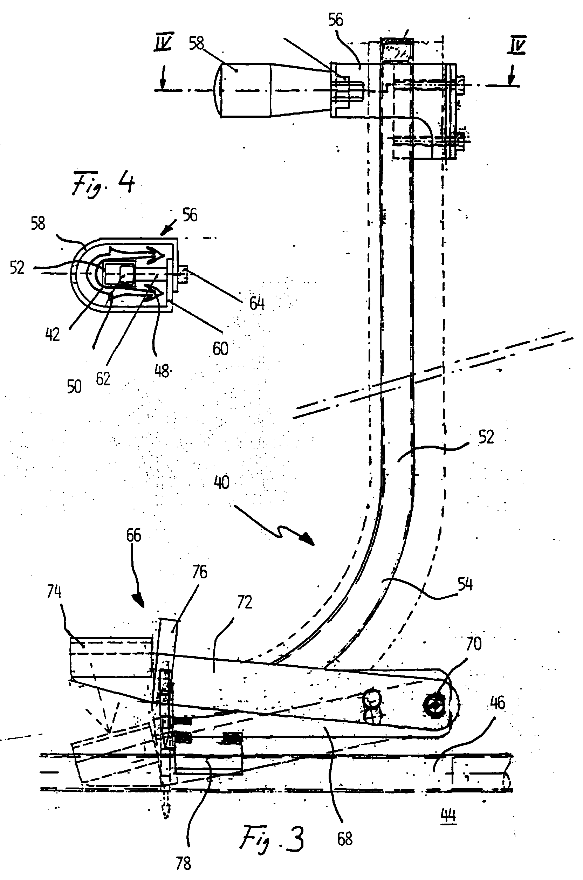

Die Fig. 3 bis 5 zeigen eine weitere Ausführungsform eines Setzgerätes 40, das zum Eindrücken von Klammern 42 vorgesehen ist, welche ein bereits auf einem Untergrund 44 verlegtes Fußbodenheizungsrohr 46 an dem perforierbaren Untergrund 44 festlegen. Diese Klammern 42 sind U-förmig ausgebildet und werden mit ihren freien zugespitzten Enden nach unten in den Untergrund eingedrückt. Die freien Enden des "U" sind mit Widerhaken 48 versehen, die verhindern, daß die Klammer nach dem Eindrücken wieder aus dem Untergrund heraustritt. Die Klammern haben ebenfalls vorzugsweise eine nach oben weisende horizontale Schulter 50, die zum Eindrücken der Klammer 42 durch einen nachfolgend beschriebenen Eindrückmechanismus vorgesehen ist.

Das Setzgerät 40 besteht aus einem L-förmigen Rahmen 52 mit einem der Übersichtlichkeit halber verkürzt dargestellten langen vertikalen Abschnitt, der über einen bogenförmigen Abschnitt 54 in ein horizontales unteres Ende übergeht. Am oberen Ende des Rahmens ist über einen speziellen Flansch 56 ein horizontal nach vorne ragender Handgriff 58 angeordnet, der im wesentlichen über dem Schwerpunkt des Setzgerätes liegt. Der Flansch 56 besteht aus einem U-förmigen Profil 58, dessen Enden aufeinander zu gebogen sind und somit einen planen Bereich 60 bilden, mittels dessen der Flansch 56 über eine Distanzhülse 62 und eine Schraube 64 an dem rechteckigen Rahmen 52 festgelegt wird. Der Spezialflansch erlaubt ein Einsetzen der Klammern 42 von oben, ohne daß der Flansch das Aufsetzen der Klammern behindert. An dem unteren Ende des Rahmens 52 ist eine Eindrückvorrichtung 66 angeordnet, die aus einem waagrechten Rahmenteil 68 besteht, an dem über eine Schwenkachse 70 ein schwenkbarer Eindrückhebel 72 gelagert ist. Das horizontale Rahmenteil 68 erstreckt sich unter dem gebogenen Abschnitt 54 horizontal nach hinten, so daß es das Arbeiten mit dem Setzgerät 40 nicht behindert. An dem vorderen äußeren Ende des Eindrückhebels 72 ist eine Betätigungsfläche 74 für die Fußbetätigung des Hebels vorgesehen. Hinter der Betätigungsfläche ist der eigentliche Eindrückstempel 76 vorgesehen, der an seiner Unterseite ein der Oberseite der Klammer 42 angepaßtes Profil aufweist. Zwischen dem horizontalen Rahmenteil 68 und dem Eindrückhebel 72 ist in nicht dargestellter Weise eine Feder angeordnet, durch die der Eindrückhebel 72 in die durchgezogene Ruhestellung vorgespannt ist. Die Betätigungsstellung des Eindrückhebels 72 ist gestrichelt dargestellt.

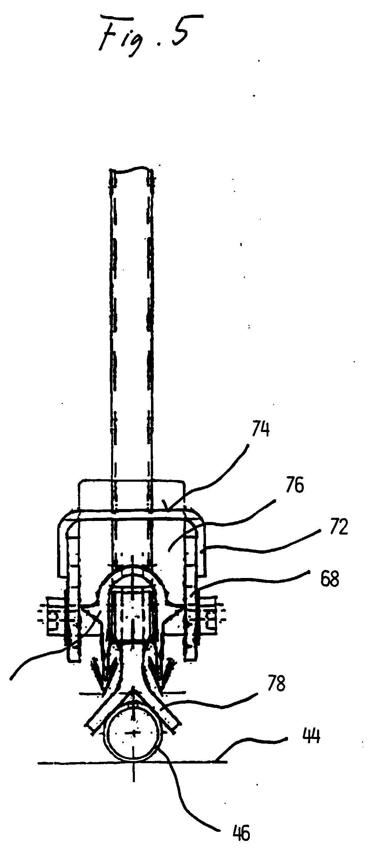

An der Unterseite des horizontalen Rahmenteils 68 ist eine Führung 78 angeschweißt, die das Profil eines auf dem Kopf stehenden "V" aufweist. Dieses Profil wird auf das Fußbodenheizungsrohr 46 aufgelegt, wodurch dann sichergestellt ist, daß die Klammer im davor angeordneten Eindrückbereich unterhalb des Eindrückstempels 76 mit seinen beiden nach unten ragenden Schenkeln beidseitig des Rohres in den Untergrund eindringt und dabei das Fußbodenheizungsrohr an dem Untergrund festlegt (Fig. 5).

Anstelle der dargestellten Ausführungsformen mit Eindrückhebeln ist ebenfalls ein translatorisch bewegbarer Eindrückstempel vorstellbar, der in einer vertikalen Führung am Ende des Rahmens gleitet.

Durch die Tatsache, daß der Rahmen durch die Magazinzuführung für die Klammern gebildet wird, wird die Handhabung des erfindungsgemäßen Setzgerätes wesentlich vereinfacht. Weiterhin ist durch die übersichtliche Anordnung der Eindrückvorrichtung am unteren Ende des Rahmens eine gute Zielgenauigkeit beim Eindrücken der Klammern gewährleistet.

## Patentansprüche

1. Setzgerät (10,40) für Klammern (12,42) zur Befestigung von Fußbodenheizungsrohren (46) an einem Untergrund (14,44) mit einer Zuführung (22,52) für die Klammern,
einem im oberen Bereich der Zuführung angeordneten Haltegriff (38,58) für das Gerät und einem am unteren Ende der Zuführung angeordneten Eindruckmechanismus (28-36,66) für die Klammern, der einen per Fuß betätigbaren Setzstempel (28,76) zum Eindrücken der Klammern umfaßt, welcher an dem unteren Ende der Zuführung oder an einem fest mit dem Ende verbundenen Rahmenteil (68) bewegbar gelagert ist.

2. Setzgerät nach Anspruch 1,
dadurch **gekennzeichnet**,
daß der Setzstempel als ein um eine horizontale Achse schwenkbar gelagerter Hebel (28,72) ausgebildet ist.

3. Setzgerät nach Anspruch 2,
dadurch **gekennzeichnet**,
daß die Oberseite des Hebels (28,72) eine Betätigungsfläche zur Fußbetätigung aufweist.

4. Setzgerät nach Anspruch 2 oder 3,
dadurch **gekennzeichnet**,
daß der Hebel (28,72) durch eine Feder (32) gegen die Zuführung oder das Rahmenteil (68) nach oben gegen einen Anschlag vorgespannt ist.

5. Setzgerät nach einem der vorhergehenden Ansprüche,
dadurch **gekennzeichnet**,
daß der Rahmenteil (68) in horizontaler Ausrichtung an dem unteren Ende der Zuführung befestigt und unter der Zuführung angeordnet ist.

6. Setzgerät nach einem der vorhergehenden Ansprüche,
dadurch **gekennzeichnet**,
daß in einem hinteren Bereich des Eindrückmechanismus der Eindrückbereich für die Klammern angeordnet ist und im vorderen Bereich des Rahmenteils ein Zieldorn (36) zum Einführen in das Loch (20) einer Lochplatte (14) angeordnet ist, wobei der Abstand des Zieldorns (36) von dem Eindrückbereich dem Abstand (d) der Löcher (20) auf der Lochplatte (14) entspricht.

7. Setzgerät nach einem der Ansprüche 1 bis 5,
dadurch **gekennzeichnet**,
daß an der Unterseite des unteren Endes der Zuführung oder an der Unterseite des Rahmenteils eine Führung (35,78) zum Aufsetzen auf den Untergrund (14) oder auf ein Fußbodenheizungsrohr (46) ausgebildet ist.

8. Setzgerät nach einem der vorhergehenden Ansprüche,
dadurch **gekennzeichnet**,
daß die Zuführung (22,52) als nach vorne gebogenes L-förmiges Magazin ausgebildet ist, dessen Außenkontur zumindest teilweise der Innenkontur der Klammern (12,42) angepaßt ist.

9. Setzgerät nach Anspruch 8,
dadurch **gekennzeichnet**,
daß das Magazin (52) einen senkrechten Abschnitt aufweist, der über einen gebogenen Abschnitt (54) in einen horizontalen Endabschnitt mit dem Eindrückmechanismus übergeht.
